# EUROPÄISCHE PATENTSCHRIFT

(11) **EP 2 720 854 B1**
(45) Veröffentlichungstag und Bekanntmachung des Hinweises auf die Patenterteilung: **09.09.2015**
(21) Anmeldenummer: 12734797.9
(22) Anmeldetag: 15.06.2012
(51) Int. Cl.: B29C 67/00

(54) **VORRICHTUNG ZUR HERSTELLUNG EINES DREIDIMENSIONALEN GEGENSTANDES**
DEVICE FOR THE PRODUCTION OF A THREE-DIMENSIONAL OBJECT
PROCÉDÉ ET DISPOSITIF DE PRODUCTION D'UN OBJET TRIDIMENSIONNEL

(30) Priorität: 16.06.2011 DE 102011106615
(43) Veröffentlichungstag der Anmeldung: 23.04.2014
(73) Patentinhaber: Arburg GmbH + Co KG, 72290 Lossburg (DE)
(72) Erfinder: KRAIBÜHLER, Herbert, 72290 Lossburg (DE); DUFFNER, Eberhard, 72181 Starzach (DE)
(74) Vertreter: Reinhardt, Harry
(86) Internationale Anmeldenummer: PCT/EP2012/002520
(87) Internationale Veröffentlichungsnummer: WO 2012/171647

(56) Entgegenhaltungen:
- US-A1- 2002 113 331
- US-A1- 2009 314 391
- US-A1- 2010 193 998

## Beschreibung

Die Erfindung betrifft eine Vorrichtung zur Herstellung eines dreidimensionalen Gegenstandes aus verfestigbarem Material nach Anspruch 1.

In der Kunststoffteileherstellung werden durch Spritzgießen oder Extrudieren in großen Losgrößen und Serien Teile unter Verwendung von Formwerkzeugen hergestellt. Der Vorteil des Kunststoffspritzgießens beruht insbesondere auf der hochgenauen Herstellung von komplexen Teilgeometrien, wobei die Funktionsvielfalt des Spritzgießverfahrens in optimaler Weise die Anforderungen an ein kostengünstige und wirtschaftliche Produktion von Kunststoffteilen abdeckt.

Gleichzeitig wächst ein Bedarf an Kunststoffteilen für Stückzahl eins und kleine Losgrößen, z.B. Musterteile, mit der Anforderung einer sehr kurzzeitigen Bereitstellung sowie Eigenschaften, die denen von spritzgegossenen Teilen ähnlich sind. Zur Herstellung solcher Teile gibt es Fertigungsverfahren, die weitläufig unter dem Begriff Prototyping und Rapid Manufacturing bekannt sind. Die Herstellung solcher Teile beruht werkzeuglos, d.h. ohne Formwerkzeuge, in den meisten Fällen auf der Erzeugung der Geometrie aus 3D-Daten. Diese Geometrien werden in unterschiedlichster Form durch entsprechende Mittel wie Aufschmelzen von Pulverschichten durch Wärmeeintrag, z.B. mittels Laser, generative Systeme wie Druckverfahren in unterschiedlicher verbindender Form der Pulverteile oder auch im sogenannten Schmelzstrangverfahren hergestellt.

Aus der dem Oberbegriff des Anspruches 1 zugrundeliegenden US 2009/0314391 A1 ist ein Extrusionsverfahren zur Objektherstellung im Rahmen eines Prototyping unter Verarbeitung metall-basierter Legierungen bekannt. Für den kontinuierlichen Objektaufbau benötigt ein Extrusionsverfahren geringe Drücke, um jedoch die bei metallischen Legierungen erforderlichen hohen Temperaturen vom Herstellungssystem fernzuhalten, ist eine Bauraumeinfassung vorgesehen, in der eine Austragseinheit, eine Aufbereitungseinheit sowie der Objektträger aufgenommen sind. Der Motor für die Relativbewegung des Objektträgers gegenüber der Austragseinheit befindet sich außerhalb des Bauraums.

Aus der EP 1 886 793 A1 ist eine Vorrichtung bekannt, bei der eine in der Spritzgießtechnik bekannte Plastifiziereinheit an einem unter Druck setzbarem Materialspeicher für die Erzeugung einer fluiden Phase eines Materials angekoppelt wird. Zu Erzeugung beines Gegenstandes auf einem Objektträger in einem Bauraum wird dieses Material über eine Austragsöffnung in Form von Tropfen ausgetragen, wobei aufgrund der Adhäsionskraft des Materials ein hoher Druck und meist auch hohe Temperaturen aufgebracht werden müssen. Der Bauraum kann bedarfsweise temperiert werden, wozu eine Temperiereinheit vorgesehen ist.

Bei einer solchen Lösung, bei der hochviskose fluide Materialien, wie aufgeschmolzene Kunststoffe in kleinsten Mengen in diskreten einzelnen Portionen bis hinunter zu wenigen Mikrogramm aus einem Materialspeicher, der unter großem Druck und eventuell Temperatur steht, verarbeitet werden sollen, stellen sich schnell Temperaturbedingungen ein, welche die Temperierung des Bauraums beeinflussen.

Aus der DE 10 2009 030 099 A1 ist es bekannt, bei der aus der EP 1 886 793 A1 bekannten Vorrichtung einen Bauraum vorzusehen, in dem der Aktuator für ein Festkörpergelenk zum Verschluss der Austrittsöffnung und auch der Objektträger mit seinen Bewegungsmechanismen aufgenommen sind, die Wärme erzeugende Aufbereitungseinheit jedoch außerhalb des Bauraums verbleibt.

Ausgehend von diesem Stand der Technik liegt der vorliegenden Erfindung die Aufgabe zugrunde, eine energieoptimierte Temperierung zur Unterstützung der Materialverbindung am zu erzeugenden Gegenstand zu erreichen.

Diese Aufgabe wird durch eine Vorrichtung mit den Merkmalen des Anspruches 1 gelöst.

Um eine möglichst gute Energieausnutzung und eine energieeffiziente Temperierung zu erreichen, wird dazu der temperierbare Bauraum von einer Bauraumeinfassung umgeben, in der wenigstens die Austrittsöffnung der Austragseinheit sowie die Aufbereitungseinheit für das zu verarbeitende Material aufgenommen sind. Da die Aufbereitungseinheit Wärme durch den Eintrag des erhitzten flüssigen Materials einbringt, entsteht im Bauraum grundsätzlich ein Wärmeüberschuss. Dieser wird zusätzlich durch die Heizung bei der Materialaufschmelzung an der Aufbereitungseinheit durch Abstrahlung von Wärme unterstützt. Damit befindet sich der Bauraum mit dem darin angeordneten Gegenstand sowie auch die Tropfen von dem Moment an, in dem sie die Austragseinheit verlassen, in einem Temperaturbereich, der durch Temperierung beeinflusst werden kann. Die Bauraumtemperierung ist jedoch wichtig bzw. notwendig, um das Verbinden der aufgetragenen Tropfen auf dem bereits erzeugten Bauteil, also dem zu erstellenden Gegenstand optimal zu beeinflussen. Dadurch ist nämlich die Temperaturdifferenz zwischen schmelzender Form des Tropfens und der Oberfläche am Bauteil individuell beeinflussbar. Diese Beeinflussbarkeit ist stark materialabhängig, z.B. bei kristallinen bzw. amorphen Kunststoffen. Andererseits ist es für eine energieoptimierte Betrachtung sinnvoll, den Wärmefluss von der Aufbereitungseinheit in Richtung auf die Druckerzeugungseinheit zu trennen, um die dort erzeugte Wärme auch dort zu halten, wo sie nutzbringend zu verwenden ist. Dadurch lässt sich die Energieeffizienz des gesamten Systems steigern. Diese Trennung erfolgt durch ein Isolierelement, das zwischen Aufbereitungseinheit und Druckerzeugungseinheit zwischengeschaltet ist. Insgesamt kann die Bauraumeinfassung isolierend aufgebaut sein, um den Wärmefluss nach außen weitestgehend zu unterbinden.

Vorteilhafterweise befinden sich der elektrische Antriebsteil der Austragseinheit außerhalb des Bauraums und kann somit unter normaler Umgebungstemperatur unter auf den Antrieb abgestimmten, idealen Betriebsbedingungen betrieben werden. Dasselbe gilt grundsätzlich auch für den Antrieb und die Antriebseinheiten des Objektträgers, wie z.B. einen Koordinatentisch. Dadurch kann einerseits sichergestellt werden, dass im Bauraum eine optimale Temperatur herrscht, andererseits wirkt sich diese Temperatur nicht auf die Teilegenauigkeit aus, da sich die Mechaniken und Antriebsmechanismen im Wesentlichen in einem gekühlten Bereich befinden.

Diese Teilegenauigkeit kann dadurch noch weiter verbessert werden, dass der Maschinentisch, der vor allem die Aufbereitungseinheit und Objektträger als voneinander beabstandete Teile der Vorrichtung trägt, hinreichend starr ausgebildet ist, so dass sich einerseits Temperaturausdehnungen nur geringfügig bemerkbar machen, andererseits aber auch der temperierte Bauraum mit dieser Anordnung hinsichtlich der Temperatur so wenig wie möglich in Verbindung kommt.

Weitere Vorteile ergeben sich aus den Unteransprüchen und der nachfolgenden Beschreibung eines bevorzugten Ausführungsbeispiels.

### Kurzbeschreibung der Figuren

Im Folgenden wird die Erfindung anhand eines in den Figuren dargestellten Ausführungsbeispieles näher erläutert. Es zeigen:
- Fig. 1: eine dreidimensionale Ansicht der mit einer Bauraumeinfassung versehenen Vorrichtung,
- Fig. 2: eine teilweise geschnittene Darstellung der Vorrichtung in Seitenansicht,
- Fig. 3: einen vergrößerten Schnitt im Bereich des Übergangs von der Druckerzeugungseinheit zur Aufbereitungseinheit.

### Ausführliche Beschreibung bevorzugter Ausführungsbeispiele

Die Erfindung wird jetzt beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen. Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

Die Figuren zeigen eine Vorrichtung zur Herstellung eines dreidimensionalen Gegenstandes 50 oder eines Bauteils aus verfestigbarem Material, das entweder im Ausgangszustand in einer fluiden Phase vorliegt oder verflüssigt werden kann, wobei die Herstellung durch sequentielles Austragen von Tropfen 70 erfolgt. Dies kann z.B. dadurch erfolgen, dass einzelne Tropfen 70 sequentiell aus einer Austrittsöffnung 12b einer Austragseinheit 12 ausgetragen werden, so dass sich Schicht für Schicht der Gegenstand 50 auf einem Objektträger 13 im Bauraum 20 ergibt. Das verfestigbare Material ist ein plastifiziertes Material, wie z.B. Silikon oder ein plastifizierbares Material wie Kunststoff oder auch pulverförmige Materialien, wobei es im Wesentlichen darauf ankommt, dass das verfestigbare Material entweder im Ausgangszustand in einer fluiden Phase vorliegt oder verflüssigt werden kann. Das Material kann auch ein unter Wärme reversibel aufschmelzbares und damit recycelbares Material sein. Beliebige andere Materialien können verwendet werden, sofern diese Materialien durch die Vorrichtung plastifizierbar und vor allem durch die wenigstens eine Austragseinheit 12 austragbar sind.

Das verfestigbare Material weist in der fluiden Phase einen sogenannten laminaren Quellfluss auf. In den Quellfluss geht u.a. die Anlagerung der Schmelze an der Wandung ein. Dies wird am deutlichsten bei einem Blick in die Erkenntnisse der Spritzgießtechnik. Bei der Formfüllung eines einfachen, rechteckigen Kanals wird die Schmelze über einen sogenannten Angusspunkt eingespritzt und beginnt sich von diesem Punkt mit geschlossenen Fließfronten kreisförmig auszubreiten, bis sie die gesamte Breite der Kavität ausfüllt. Einige Zeit danach kann der Bereich zwischen dem Einlauf und der Fließfront als nahezu ausgebildet betrachtet werden. An der Fließfront selbst herrscht eine besondere Strömungssituation, der "Quellfluss", da die Stromlinien in diesem Bereich wie eine Quelle erscheinen, wenn man sie in Bezug auf ein mitbewegtes Koordinatensystem betrachtet. Zwischen zwei den Kavitätsoberflächen nahe liegenden, rasch erstarrten Masseschichten fließt die Schmelze, wobei sie in der Mitte der Kavität mit größeren Geschwindigkeiten zur Fließfront hin schreitet. Kurz bevor die Schmelze die Fließfront erreicht, reduziert sich ihre Geschwindigkeitskomponente in Fließrichtung, sie fließt schräg zur Wand, bis sie sich an die Wand anlegt.

Der laminare Quellfluss ist für die Erzeugung von auf den Bauraum 20 ausgerichteten' Tropfen 70 auf Grund seiner laminaren Ausbildung einerseits von Vorteil, andererseits bestehen vor allem bei der Ausbildung kleiner Tropfen genau hier auch die Probleme, die eine Umsetzung mit aus der Spritzgießtechnik bekannten Einrichtungen und Materialien erschweren. Die Wandhaftung führt dazu, dass sich die Massen nur schwer zu Tropfen mit gewünschten kleinen Volumen, vorzugsweise im Bereich kleiner gleich 1 mm³ und gewünschter Fluggeschwindigkeit ausbilden lassen, andererseits ist eine entsprechend hohe Viskosität des Materials gerade für die Ausbildung einer geeigneten Tropfenform eines Tropfens von Bedeutung.

Dies unterscheidet die verwendeten Materialien auch von den vorbekannten Wachsen. Aufgrund ihrer Viskosität lassen sich Wachse im normalen Thermodruck- oder Inkjetverfahren ausbringen, also durch reines kinematisches, druckloses Beschleunigen ohne Druckdifferenz des aufgeschmolzenen Tropfens. Die hier verwendeten Materialien unterscheiden sich hiervon bereits dadurch, dass ihre Viskositätszahl um eine bis mehrere Zehnerpotenzen höher ist. So liegt die dynamische Viskositätszahl des verfestigbaren Materials zwischen 100 und 10000 [Pa s], wobei vorzugsweise das verfestigbare Material ein in der Spritzgießtechnik üblicher Kunststoff oder ein Harz ist. Dies macht die Verarbeitung aus einem unter Druck setzbaren Materialspeicher und damit auch die Verwendung einer gesonderten Druckerzeugungseinheit erforderlich, da Drücke von mehr als 10 bis 100 MPa (100 bis 1000 bar) ohne weiteres erforderlich sind, insbesondere wenn zur Erzielung kleiner Tropfenvolumen kleine Austragsöffnungen eingesetzt werden.

Vorzugsweise liegt das gewünschte Volumen des Tropfens 70 insbesondere im Bereich von 0,01 bis 0,5 mm³, vorzugsweise im Bereich von 0,05 bis 0,3 mm³ und besonders vorzugsweise im Bereich von etwa 0,1 mm³. Der Durchmesser der Austrittsöffnung 20 ist insbesondere kleiner gleich 1mm, vorzugsweise etwa 0,1 mm. Bei einer durchaus üblichen Einspritzgeschwindigkeit von 100 [cm/s], die durch einen sogenannten Punktanguss mit 0,1 [mm] Durchmesser die Masse fördert, ergibt sich mit Volumenstrom durch Fläche ein Wert von 10.000 [m/s]. Dies führt für die fluide Phase zu einem laminaren Quellfluss mit Fliessgeschwindigkeiten bis zu 10.000 m/s.

Die Vorrichtung hat mit ihrer Austragseinheit die Aufgabe, hochviskose fluide Materialien wie aufgeschmolzene Kunststoffe in kleinsten Mengen bis hinunter zu wenigen Mikrogramm aus einem Materialspeicher auszutragen, der unter großem Druck und eventuell hoher Temperatur steht. Die kleinsten Mengen/Tropfen 70 des Materials werden in diskreten einzelnen Portionen durch die Austragseinheit 12 ausgebracht, wobei deren Größe von der Vorrichtung beeinflussbar ist. Die ausgetragenen Portionen besitzen eine so hohe kinetische Energie, dass sie die Adhäsionskräfte überwinden können und von der Vorrichtung abheben und als Tropfen 70 wegfliegen, um im Bauraum 20 auf dem Objektträger 13 den Gegenstand 50 aufzubauen. Dabei wird das Material aufgeschmolzen, so dass es eine Viskosität aufweist, die höher als die Viskosität am Glaspunkt ist. Damit liegt ein Energieüberschuss vor, der energieeffizient zur Temperierung des Bauraums 20 genutzt werden kann.

Die Druckerzeugungseinheit 10 erzeugt den Druck auf die in der Aufbereitungseinheit 11 aufbereitete fluide Phase, wobei vorzugsweise die Aufbereitungseinheit 11 bereits den Materialspeicher für das in der fluiden Phase vorliegende Material bildet. Die Druckerzeugungseinheit steht mit der Aufbereitungseinheit 11 in Verbindung, die Aufbereitungseinheit mit der Austragungseinheit 12, die dann ihrerseits über die Austrittsöffnung 12b den diskontinuierlichen Tropfen 70 erzeugt.

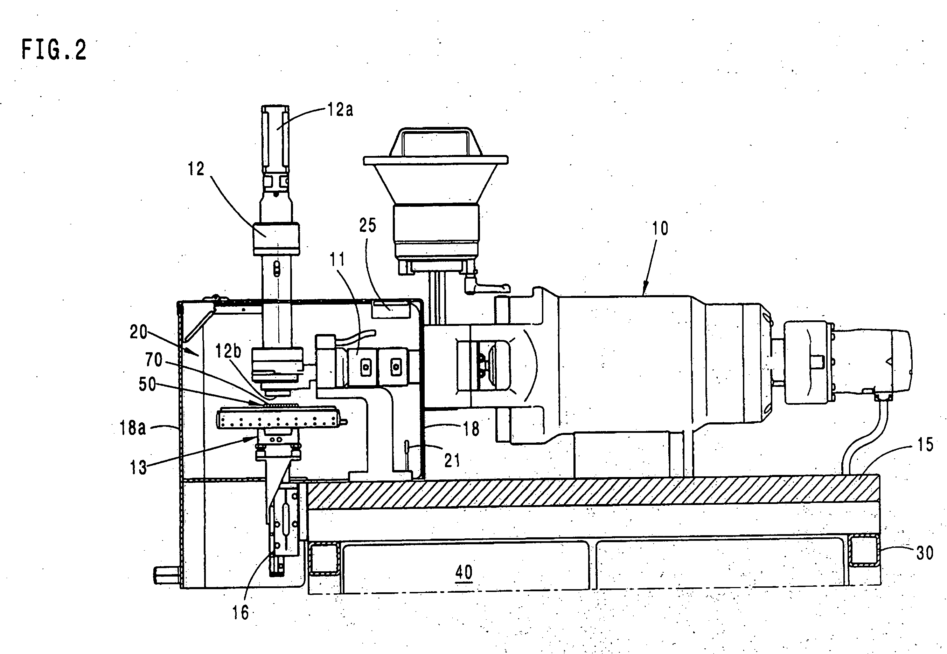

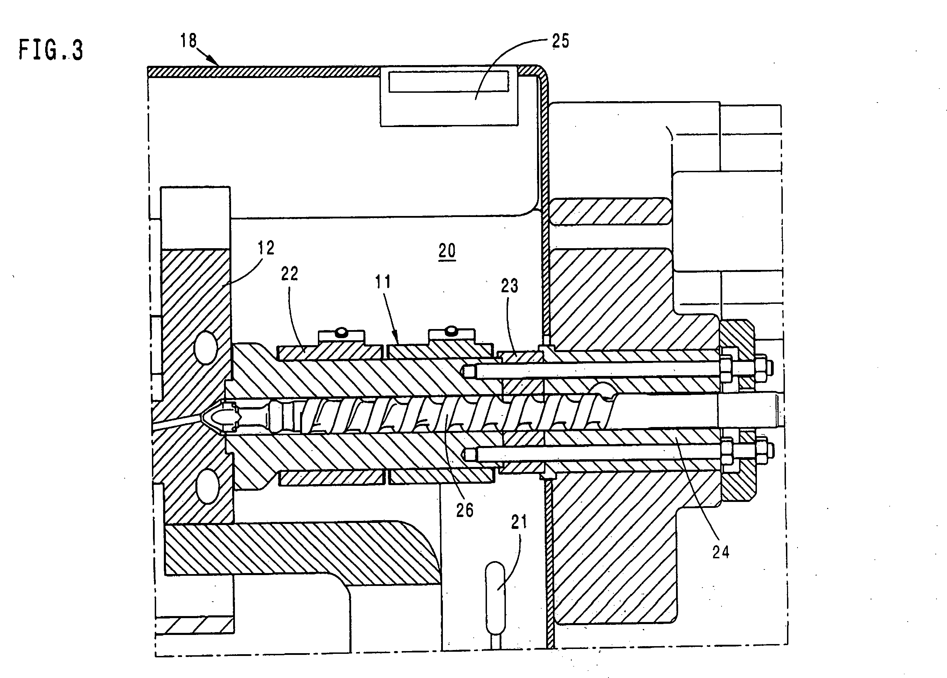

Unter den genannten Bedingungen gewinnt die Temperatur im Bauraum 20 an Bedeutung, der mittels einer Temperaturregeleinheit 25 energieeffizient temperierbar ist. Gemäß den Figuren 2 und 3 ist der temperierbare Bauraum 20 von einer Bauraumeinfassung 18 umgeben. Diese Bauraumeinfassung 18 umgibt zumindest die Austrittsöffnung 12b der Austragseinheit 12 sowie die Aufbereitungseinheit 11 und auch den Objektträger 13, auf dem der Gegenstand 50 hergestellt wird. Andererseits sind gemäß den Figuren 2 und 3 die Aufbereitungseinheit 11 und die Druckerzeugungseinheit 10 auch durch die Bauraumeinfassung 18 voneinander getrennt.

Dadurch wird es möglich, den Eintrag des erhitzten flüssigen Kunststoffes oder eines anderen verfestigbaren Materials, das in der Aufbereitungseinheit 11 unter Wärmezufuhr aufbereitet wird, im Bauraum als Wärmeüberschuss zu nutzen. Dieser Wärmeintrag wird gemäß Fig. 3 zusätzlich durch die Heizung mittels der Heizkörper 22 bei der Materialaufschmelzung infolge Abstrahlung unterstützt. Im Bereich der Aufbereitungseinheit 11 wird das Material plastifiziert und durch die Schmelzeschnecke 26 bis an den Übergangsbereich zur Austragseinheit 12 verbracht. Dem Bauraum 20 zugeordnet ist ein Fühler 21 sowie eine Temperaturregeleinheit 25, die vom Fachmann grundsätzlich an geeigneter Stelle platziert werden, d.h. nicht an der Stelle angeordnet sein müssen, die in den Figuren angegeben sind. Durch diese Sensorik und Regelung kann die Temperatur im Bauraum 20 so geregelt werden, dass z.B. durch Ventilatoren oder Wärmetauscher ein Wärmeüberschuss geregelt abgeführt werden kann. Ventilatoren oder andere Hilfsmittel können wie bei einem Umluftofen auch vorgesehen sein, um eine gleichmäßige Wärmeverteilung innerhalb des Bauraums 20 zu gewährleisten.

Um gleichzeitig die Wärmezufuhr an der Aufbereitungseinheit 11 zu erhalten, wird der Bauraum 20 zur Druckerzeugungseinheit 10 isoliert, d.h. einerseits trennt die Bauraumeinfassung die Druckerzeugungseinheit 10 wärmetechnisch vom Bauraum 20 und der Aufbereitungseinheit 11, andererseits wird dort gemäß Fig. 3 ein Isolierelement 23 zwischen Druckerzeugungseinheit 10 und Aufbereitungseinheit 11 in der Wandung der Bauraumeinfassung 18 angeordnet.

Die Bauraumeinfassung trennt den Bauraum 20 gemäß Fig. 2 grundsätzlich insgesamt gegenüber seinem Umfeld isolierend, so dass der Wärmeeintrag der innerhalb der Bauraumeinfassung 18 angeordneten Aufbereitungseinheit 11 den Bauraums temperiert. Dennoch ist die Aufbereitungseinheit 11 an der Austragseinheit 12 angeschlossen, was insofern auch temperaturtechnisch zu berücksichtigen ist, da eine Temperaturdehnung der Aufbereitungseinheit 11 damit auch auf die Lage der Austragseinheit 12 und somit auf die Teilegenauigkeit einwirkt. Die damit geschaffenen Isolierung kann auch vorteilhaft genutzt werden, um im Bauraum eine Schutzgasatmosphäre zu schaffen.

Da der zu erzeugende Gegenstand 50 auf dem z.B. als Koordinatentisch ausgebildeten Objektträger 13 entsteht, wird auch der Objektträger 13 im Bauraum 20 angeordnet. Dies gilt jedoch nicht in gleicher Weise für die entsprechenden, vorzugsweise elektrischen Antriebsteile 12a der Austragseinheit 12 bzw. für die Antriebseinheit 16 des Objektträgers 13. Beide Elemente werden gemäß Fig. 2 außerhalb der Bauraumeinfassung 18 angeordnet. Dadurch können diese vorzugsweise elektrischen Antriebsteile unter Bedingungen betrieben werden, die nicht durch die im Bauraum 20 gewünschte Temperatur beeinflusst werden. Sie befinden sich vielmehr unter normalen Umgebungsbedingungen und damit für diese Teile meist unter idealen Betriebsbedingungen. Denkbar ist hierfür z.B., den Koordinatentisch über einer Membran anzuordnen, die von der Anlenkung des Tischs durchgriffen wird, gleichzeitig aber den Antriebseinheiten und dem Tisch den erforderlichen Bewegungsspielraum ermöglicht. Berücksichtigt man zudem, dass der Objektträger 13 durch die Antriebseinheit 16 räumlich relativ zur Austrittsöffnung 12b bewegbar ist, und dies auch möglichst präzise sein soll, ist es von Vorteil, wenn die Antriebseinheit 16 ebenfalls außerhalb der Bauraumeinfassung 18 angeordnet ist, da dann auch dort präziser die Koordinaten für den Objektträger 13 angesteuert werden können. Grundsätzlich kann zudem eine übliche Temperaturkompensation softwaremäßig mit Hilfe geeigneter Sensorik erfolgen, um eine lagemäßige Soll-ist-Referenzierung umzusetzen.

Wesentlich ist damit, dass für die Bauraumtemperierung einerseits die notwendige Temperierenergie aus dem Prozess, d.h. vorzugsweise aus der Materialaufbereitung genutzt wird, in dem durch Energiestau bzw. Energieabfuhr geregelt eine energieoptimierte Temperierung zur Unterstützung der Herstellung des Gegenstands 50 durch Tropfenverbindung genutzt wird. Zudem ist eine gesamte Bauraumtemperierung einfacher zu erreichen als ein punktuelle Energieeintrag z.B. am Verbindungspunkt zwischen dem bereits erzeugten Gegenstand 50 und dem neu hinzukommenden Tropfen 70.

Die Teilgenauigkeit wird weiter dahingehend unterstützt, dass die Vorrichtung gemäß Fig. 2 auf einem Maschinengestell 30 angeordnet ist, in dem auch die Maschinensteuerung 40 und die Bedieneinheit 41 angeordnet sind, und auf dem ein Maschinentisch 15 angeordnet ist, auf dem der Objektträger 13 zum Aufbau des Gegenstandes 50 sowie die Aufbereitungseinheit 11 in einem geometrisch feststehenden Verhältnis zueinander montiert sind. Dieser Maschinentisch ist vorzugsweise eine außerhalb der Bauraumeinfassung 18 angeordnete Platte gemäß Fig. 2, die hinsichtlich der im Bauraum 20 gegenüber dem Umfeld entstehenden Temperaturdifferenz so stark bemessen ist, dass die Genauigkeit des zu erstellenden Gegenstandes 50 unbeeinflusst bleibt.

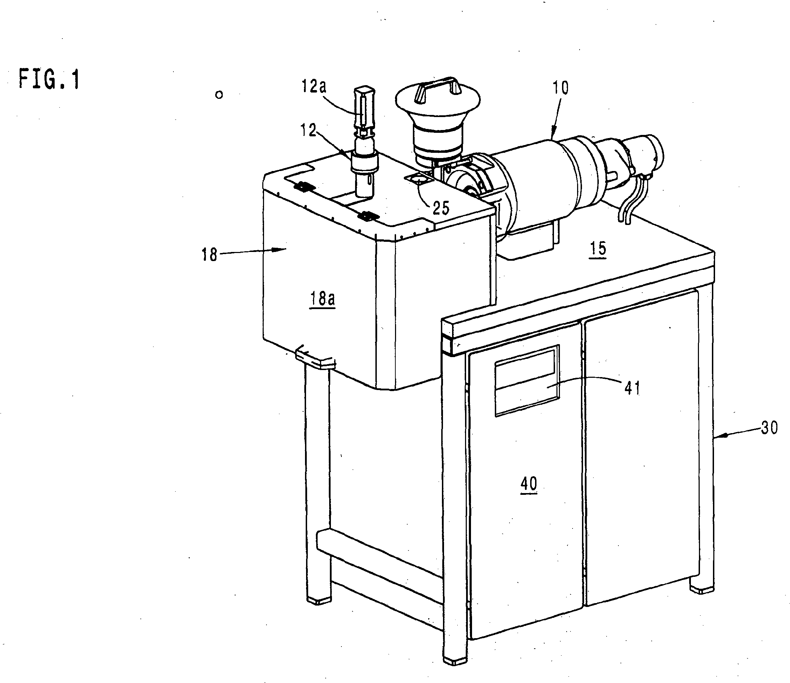

Gemäß Fig. 1 weist die Bauraumeinfassung 18 eine verschließbare Öffnung 18a auf, durch die der Bauraum zugänglich ist. Aufbereitungseinheit 11 und Druckerzeugungseinheit 10 werden durch eine in der Spritzgießtechnik bekannte Plastifiziereinheit zur Aufbereitung des verfestigbaren Materials als plastifiziertes oder plastifizierbares Material gebildet. Damit kann ein standardmäßig erhältliches oder beim Spritzgießer vorhandenes Material zur Herstellung der Teile verwendet werden. Ein spezielles Sondermaterial ist damit nicht erforderlich.

### Bezugszeichenliste

- 10: Druckerzeugungseinheit
- 11: Aufbereitungseinheit
- 12: Austragseinheit
- 12a: Antriebsteil
- 12b: Austrittsöffnung
- 13: Objektträger
- 15: Maschinentisch
- 16: Antriebseinheit
- 18: Bauraumeinfassung
- 18a: verschließbare Öffnung
- 20: Bauraum
- 21: Fühler
- 22: Heizkörper
- 23: Isolierelement
- 24: Zylinderheizung
- 25: Temperaturregeleinheit
- 26: Schmelzeschnecke
- 30: Maschinengestell
- 40: Maschinensteuerung
- 41: Bedieneinheit
- 50: Gegenstand
- 70: Tropfen

## Patentansprüche

1. Vorrichtung zur Herstellung eines dreidimensionalen Gegenstandes (50) aus verfestigbarem Material, das entweder im Ausgangszustand in einer fluiden Phase vorliegt oder verflüssigt werden kann, durch sequentielles Austragen von Tropfen (70) mit
- wenigstens einem Bauraum (20) zum Aufbau des Gegenstandes (50) auf einem Objektträger (13),
- einer Temperiereinheit zur Temperierung des Bauraums (20),
- wenigstens einer Aufbereitungseinheit (11) zur Aufbereitung des verfestigbaren Materials in die fluide Phase,
- wenigstens einer Druckerzeugungseinheit (10) zur Erzeugung von Druck auf die in der Aufbereitungseinheit (11) aufbereitete, fluide Phase,
- wenigstens einer Austragseinheit (12) zum Austragen des verfestigbaren Materials durch eine Austrittsöffnung (12b) in Richtung auf den Bauraum (20) in Form von Tropfen (70),
- wobei der temperierbare Bauraum (20) von einer Bauraumeinfassung (18) umgeben ist, in der zumindest die Austrittsöffnung der Austragseinheit (12) und die Aufbereitungseinheit (11) sowie der Objektträger (13) aufgenommen sind,
**dadurch gekennzeichnet, dass** in der Wandung der Bauraumeinfassung (18) ein Isolierelement (23) vorgesehen ist, das zwischen der Aufbereitungseinheit (11) und der Druckerzeugungseinheit (10) angeordnet ist und die Aufbereitungseinheit (11) von der Druckerzeugungseinheit (10) trennt.

2. Vorrichtung nach Anspruch 1, **dadurch gekennzeichnet, dass** die Bauraumeinfassung (18) den Bauraum gegenüber seinem Umfeld isolierend umgibt, so dass der Wärmeeintrag der innerhalb der Bauraumeinfassung (18) angeordneten Aufbereitungseinheit (11) den Bauraum temperiert.

3. Vorrichtung nach Anspruch 1 oder 2, **dadurch gekennzeichnet, dass** die Aufbereitungseinheit (11) an der Austragseinheit (12) angeschlossen ist.

4. Vorrichtung nach einem der vorhergehenden Ansprüche, **dadurch gekennzeichnet, dass** ein vorzugsweise elektrisch betrieben Antriebsteil (12a) der Austragseinheit (12) außerhalb der Bauraumeinfassung (18) angeordnet ist.

5. Vorrichtung nach einem der vorhergehenden Ansprüche, **dadurch gekennzeichnet, dass** ein Objektträger (13) zum Aufbau des Gegenstands (50) vorgesehen ist, der durch wenigstens eine Antriebseinheit (16) relativ zur Austrittsöffnung (12b) bewegbar ist, wobei die Antriebseinheit (16) im Wesentlichen außerhalb der Bauraumeinfassung (18) angeordnet ist.

6. Vorrichtung nach einem der vorhergehenden Ansprüche, **dadurch gekennzeichnet, dass** sie einen Maschinentisch (15) aufweist, auf dem ein Objektträger (13) zum Aufbau des Gegenstands (50) sowie die Aufbereitungseinheit (11) in einem geometrisch feststehenden Verhältnis zueinander montiert sind.

7. Vorrichtung nach Anspruch 6, **dadurch gekennzeichnet, dass** der Maschinentisch (15) für die Montage der Teile der Vorrichtung eine außerhalb der Bauraumeinfassung (18) angeordnete Platte aufweist, die hinsichtlich der im Bauraum (20) gegenüber dem Umfeld entstehenden Temperaturdifferenz so starr bemessen ist, dass die Genauigkeit des zu erstellenden Gegenstands (50) unbeeinflusst bleibt.

8. Vorrichtung nach einem der vorhergehenden Ansprüche, **dadurch gekennzeichnet, dass** innerhalb der Bauraumeinfassung (18) ein Fühler (21) einer Temperaturregeleinheit (25) zur Temperierung des Bauraums vorgesehen ist.

9. Vorrichtung nach einem der vorhergehenden Ansprüche, **dadurch gekennzeichnet, dass** die Aufbereitungseinheit (11) und die Druckerzeugungseinheit (10) durch eine in der Spritzgießtechnik bekannte Plastifiziereinheit zur Aufbereitung des verfestigbaren Materials als plastifiziertes oder plastifizierbares Material ausgebildet ist.

## Claims

1. Device for the production of a three-dimensional object (50) from hardenable material that is either present in the starting state in a fluid phase or can be liquefied, by the sequential discharge of drops (70) with
- at least one construction space (20) for forming the object (50) on an object support (13),
- a temperature control unit for controlling the temperature of the construction space (20),
- at least one processing unit (11) for processing the hardenable material to the fluid phase,
- at least one pressure generating unit (10) for generating pressure onto the fluid phase processed in the processing unit (11),
- at least one discharge unit (12) for discharging the hardenable material in the form of drops (70) through an outlet (12b) in the direction of the construction space (20),
- wherein the temperature-controllable construction space (20) is surrounded by a construction space surround (18), in which at least the outlet of the discharge unit (12) and the processing unit (11) as well as the object support (13) are accommodated,
**characterised in that** an insulating element (23), which is arranged between the processing unit (11) and the pressure generating unit (10) and which separates the processing unit (11) from the pressure generating unit (10), is provided in the wall of the construction space surround (18).

2. Device according to claim 1, **characterised in that** the construction space surround (18) surrounds the construction space to insulate it from its surrounding area, so that the supply of heat of the processing unit (11) arranged inside the construction space surround (18) controls the temperature of the construction space.

3. Device according to claim 1 or 2, **characterised in that** the processing unit (11) is connected to the discharge unit (12).

4. Device according to one of the preceding claims, **characterised in that** a preferably electrically operated drive part (12a) of the discharge unit (12) is arranged outside the construction space surround (18).

5. Device according to one of the preceding claims, **characterised in that** an object support (13) is provided for forming the object (50), which is movable relative to the outlet (12b) by means of at least one drive unit (16), wherein the drive unit (16) is arranged substantially outside the construction space surround (18).

6. Device according to one of the preceding claims, **characterised in that** it has a machine table (15), on which an object support (13) for forming the object (50) and also the processing unit (11) are mounted in a geometrically fixed relation to one another.

7. Device according to claim 6, **characterised in that** for the assembly of the parts of the device the machine table (15) has a plate, which is arranged outside the construction space surround (18) and which is so fixed with respect to the temperature difference between the construction area (20) and the surrounding area that the precision of the object (50) to be produced remains unaffected.

8. Device according to one of the preceding claims, **characterised in that** a sensor (21) of a temperature control unit (25) for controlling the temperature of the construction space is provided within the construction space surround (18).

9. Device according to one of the preceding claims, **characterised in that** the processing unit (11) and the pressure generating unit (10) are formed by a plasticising unit known from injection moulding technology for processing the hardenable material as plasticised or plasticisable material.

## Revendications

1. Dispositif pour la fabrication d'un objet tridimensionnel (50) à partir d'un matériau durcissable, qui se présente au départ soit sous la forme d'une phase fluide ou qui peut être fluidifié, par distribution séquentielle de gouttes (70), comportant
- au moins un espace de construction (20) pour la construction de l'objet (50) sur un support d'objet (13),
- une unité de contrôle de la température pour contrôler la température de l'espace de construction (20),
- au moins une unité de préparation (11) pour le passage du matériau durcissable en phase fluide ;
- au moins une unité de production de pression (10) pour exercer une pression sur la phase fluide préparée dans l'unité de préparation (11),
- au moins une unité de distribution (12) pour distribuer le matériau durcissable à travers un orifice de sorte (12b) en direction de l'espace de construction (20) sous la forme de gouttes (70),
- dans lequel l'espace de construction (20) à température contrôlable est entouré d'une enceinte d'espace de construction (18), dans laquelle l'orifice de sortie de l'unité de distribution (12) et l'unité de préparation (11) ainsi que le support d'objet (13) sont logés,
**caractérisé en ce qu'**il est prévu dans l'épaisseur de l'enceinte d'espace de construction (18) un élément d'isolement (23) qui est disposé entre l'unité de préparation (11) et l'unité de production de pression (10) et qui sépare l'unité de préparation (11) de l'unité de production de pression (10).

2. Dispositif selon la revendication 1, **caractérisé en ce que** l'enceinte d'espace de construction (18) entoure l'espace de construction en l'isolant de son environnement, de sorte que l'apport de chaleur de l'unité de préparation (11) disposée à l'intérieur de l'enceinte d'espace de construction (18) contrôle la température de l'espace de construction.

3. Dispositif selon la revendication 1 ou 2, **caractérisé en ce que** l'unité de préparation (11) est reliée à l'unité de distribution (12).

4. Dispositif selon l'une des revendications précédentes, **caractérisé en ce qu'**une pièce d'entraînement (12a) de l'unité de distribution (12), de préférence entraînée électriquement, est disposée hors de l'enceinte d'espace de construction (18).

5. Dispositif selon l'une des revendications précédentes, **caractérisé en ce qu'**il est prévu pour la construction de l'objet (50) un support d'objet (13) qui est déplaçable par rapport à l'orifice de sortie (12b) au moyen d'au moins une unité d'entraînement (16), cette unité d'entraînement (16) étant disposée essentiellement à l'extérieur de l'enceinte d'espace de construction (18).

6. Dispositif selon l'une des revendications précédentes, **caractérisé en ce qu'**il comprend une table de machine (15), sur laquelle un support d'objet (13) pour la construction de l'objet (50) ainsi que l'unité de préparation (11) sont montés l'un par rapport à l'autre dans un rapport géométrique fixe.

7. Dispositif selon la revendication 6, **caractérisé en ce que** la table de machine (15) présente une plaque disposée à l'extérieur de l'enceinte d'espace de construction (18) pour le montage des pièces du dispositif, cette plaque étant dimensionnée, pour ce qui est de la différence de température s'établissant entre l'intérieur de l'espace de construction (20) et l'environnement, de manière si rigide que la précision de l'objet (50) à fabriquer n'est pas influencée.

8. Dispositif selon l'une des revendications précédentes, **caractérisé en ce qu'**il est prévu à l'intérieur de l'enceinte d'espace de construction (18) un détecteur (21) d'une unité de réglage de température pour contrôler la température de l'espace de construction.

9. Dispositif selon l'une des revendications précédentes, **caractérisé en ce que** l'unité de préparation (11) et l'unité de production de pression (10) sont réalisées sous la forme d'une unité de plastification connue dans la technique de moulage par injection pour la préparation du matériau durcissable en tant que matériau plastifié ou plastifiable.
